# EUROPÄISCHE PATENTSCHRIFT

(11) **EP 1 727 345 B1**
(45) Veröffentlichungstag und Bekanntmachung des Hinweises auf die Patenterteilung: **18.11.2009**
(21) Anmeldenummer: 05104540.9
(22) Anmeldetag: 27.05.2005
(51) Int. Cl.: H04N 1/00

(54) **Verfahren und System zur Herstellung von Fotobüchern**
Method and system for the production of photobooks
Procédé et système pour la production de livres de photographies

(43) Veröffentlichungstag der Anmeldung: 29.11.2006
(73) Patentinhaber: Weig, Norbert, 92711 Parkstein (DE)
(72) Erfinder: Weig, Norbert, 92711 Parkstein (DE)
(74) Vertreter: Lang, Christian

(56) Entgegenhaltungen:
- EP-A- 0 860 980
- EP-A- 1 491 993
- US-A1- 2003 174 213
- US-A1- 2005 094 014
- PATENT ABSTRACTS OF JAPAN Bd. 2000, Nr. 03, 30. März 2000 (2000-03-30) & JP 11 355705 A (SHARP CORP), 24. Dezember 1999 (1999-12-24)

## Beschreibung

Die vorliegende Erfindung betrifft ein System bzw. ein Verfahren nach dem Oberbegriff des Anspruchs 1 bzw. dem Oberbegriff des Anspruchs 8.

Aufgrund der Integration von Kameras in Mobiltelefone ist es aus dem Stand der Technik bekannt, digitale Bilder direkt an einen Computer in einem Computemetzwerk, wie einem Webserver, zu senden, auf dem die Bilder abgelegt werden können. Derartige Systeme sind beispielsweise aus der EP-A-0 860980 bzw. US 2003/174 213 A1 bekannt.

Allerdings ist es bei den bekannten Verfahren bzw. Systemen erforderlich, dass ein Nutzer, der seine Bilder auf einem Webserver hinterlegt hat, über einen weiteren Computer, der an das Netzwerk mit dem Server angeschlossen ist, mit dem Webserver eine Verbindung aufbaut, um die Bilder weiterzuverarbeiten und/oder an einen Bilderdienst zu übermitteln, der die Bilder auf Fotopapier ausdruckt, um Abzüge für den Nutzer herzustellen. Zwar ist aus der EP-A-0 860980 A2 bereits bekannt, vor dem Versenden der digitalen Bilder an einen Server oder eine Druckeinrichtung diese geringfügig zu bearbeiten, jedoch ist es nicht möglich, damit komplexe Bildprodukte herzustellen. Digitale Kameras, die umfassende Bildbearbeitungswerkzeuge bereitstellen, wie in der US 2005/094014 A1 offenbart, sehen wiederum keine Einrichtungen zur drahtlosen Kommunikation vor.

Üblicherweise werden die Bilder beim Nutzer dann entsprechend archiviert und beispielsweise in Fotoalben eingeklebt. Dieses Verfahren ist jedoch insgesamt sehr aufwändig und umständlich, da mehrere separate Verfahrensschritte erforderlich sind.

Es ist deshalb Aufgabe der vorliegenden Erfindung, ein Verfahren bzw. ein System bereit zu stellen, bei dem eine schnelle, effektive und qualitativ hochwertige Be- und/oder Verarbeitung von digitalen Bildern bis hin zur entsprechenden Archivierung der Bilder auf einfache Weise möglich ist.

Diese Aufgabe wird gelöst durch ein System mit den Merkmalen des Anspruchs 1 sowie ein Verfahren mit den Merkmalen des Anspruchs 8. Vorteilhafte Ausgestaltungen sind Gegenstand der abhängigen Ansprüche.

Die vorliegende Erfindung geht aus von der Erkenntnis, dass Kameras mit entsprechenden Sende- und/oder Empfangseinheiten bzw. Mobiltelefone mit Kamerafunktionen derart weitergebildet und in ein System eingebunden werden können, das es ermöglicht, dass der Nutzer mittels der mobilen Kamera bzw. eines entsprechenden Mobiltelefons mit Fotofunktion in der Lage ist, die komplette Be- und Verarbeitung insgesamt zu steuern. Zu diesem Zweck sind in dem System eine Druckeinrichtung sowie eine stationäre Bildbearbeitungseinheit vorgesehen, die die Bilddaten sowie die Anweisungen des Nutzers von der mobilen Kamera bzw. einem Mobiltelefon mit Kamera empfangen und weiterverarbeiten.

Hierbei ist es möglich, dass die Bildbe- und/oder -verarbeitung kombiniert mit teilweiser Bildbearbeitung in der Kamera und teilweiser Bildbe- und -verarbeitung in der Bildbearbeitungseinheit stattfindet.

Entsprechend sind sowohl die Kamera als auch die Bildbearbeitungseinheit derart ausgebildet, dass zumindest Informationen von der Kamera zur Bildbearbeitungseinheit übertragen werden können. Vorzugsweise ist auch eine Übertragung von Kommunikationsdaten von der Bildbearbeitungseinheit zur Kamera vorgesehen, um eine gegenseitige Kommunikation aufbauen zu können, die beispielsweise das aufeinander folgende Abfragen von entsprechenden Informationen und Anweisungen möglich macht.

Kamera und/oder Bildbearbeitungseinheit sind vorzugsweise programmtechnisch so eingereichtet, dass sie die Be- und/oder Verarbeitung bzw. Überarbeitung der Bilder übernehmen können. Neben der direkten Bearbeitung der Bilder hinsichtlich Helligkeit, Kontrast, Farbwiedergabe, Formatierung und dergleichen ist insbesondere auch eine Zusammenstellung, Sortierung und Eingliederung der Bilder in entsprechende Seitenlayouts, Buchvorlagen und dergleichen vorgesehen. Zu diesem Zweck können entsprechende Vorlagen in den Speichermitteln der Kamera und/oder der Bildbearbeitungseinheit vorgesehen sein.

Vorzugsweise kann die Bildbearbeitungseinheit oder ein Teil davon auch in der Druckeinrichtung integriert sein, so dass die Bilder und Zusatzinformationen direkt an die Druckeinrichtung übermittel werden können. Die Druckeinrichtung kann ferner Einrichtungen zum Binden und/oder Schneiden umfassen oder um diese erweitert werden.

Vorzugsweise ist die Bildbearbeitungseinheit oder ein Teil davon ein an ein Computernetzwerk angeschlossener Rechner mit Prozessor, Vorzugsweise kann die Bildbearbeitungseinheit oder ein Teil davon auch in der Druckeinrichtung integriert sein, so dass die Bilder und Zusatzinformationen direkt an die Druckeinrichtung übermittel werden können. Die Druckeinrichtung kann ferner Einrichtungen zum Binden und/oder Schneiden umfassen oder um diese erweitert werden.

Vorzugsweise ist die Bildbearbeitungseinheit oder ein Teil davon ein an ein Computernetzwerk angeschlossener Rechner mit Prozessor, Speichermitteln und entsprechenden Datenverarbeitungsprogrammen, die in den Speichermitteln gespeichert sind.

Insbesondere ist es mit der vorliegenden Erfindung in einfacher Weise möglich, mittels einer funktechnisch ausgestatteten Kamera oder eines mit einer Kamera versehenen Mobiltelefons unmittelbar und direkt einen Bildband oder ein Fotobuch zu kreieren, welches an einem entfernten Ort gedruckt, gebunden und/oder in sonstiger Weise hergestellt wird. Auf diese Weise ist es möglich, Bilder unmittelbar und direkt in ansprechender Weise zu verarbeiten und zu archivieren, so dass z.B. Bilder eines Urlaubs, einer Feierlichkeit oder dergleichen nach kurzer Frist direkt als Bildband oder Fotobuch vorliegen. Dies kann dann beispielsweise dem Auftraggeber zugesandt werden, so dass er bei seiner Rückkehr aus dem Urlaub das Buch bereits vorfindet.

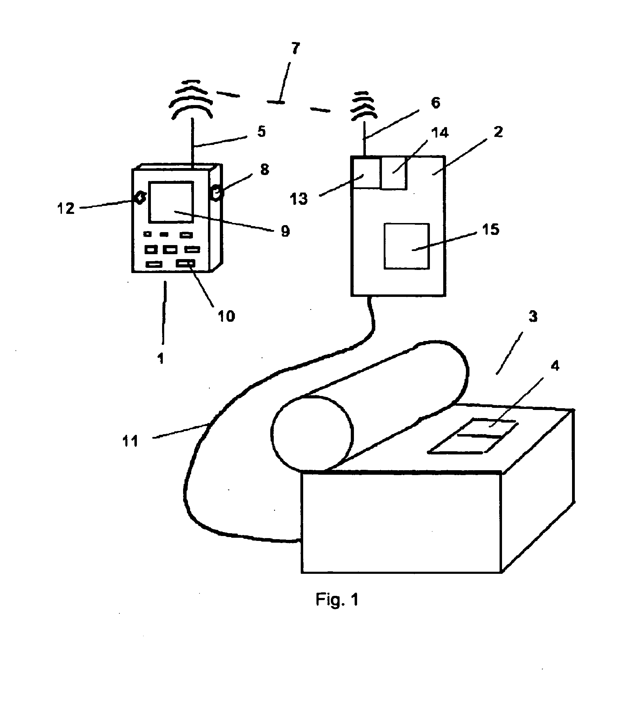

Weitere Vorteile, Kennzeichen und Merkmale der vorliegenden Erfindung werden bei der nachfolgenden detaillierten Beschreibung eines Ausführungsbeispiels an Hand der beigefügten Figur deutlich. Die einzige Figur zeigt hierbei, in rein schematischer Weise, eine Übersicht über ein erfindungsgemäßes System zur Herstellung von Fotobüchern und dergleichen.

In der einzigen Figur ist eine mobile Kamera 1 dargestellt, die eine Sende-/Empfangseinheit mit einer Antenne 5, eine Tastatur 10, ein Display 9, ein Mikrofon 12 und ein Objektiv 8 aufweist.

Die Kamera 1 weist einen nicht näher dargestellten Prozessor und Speichermittel sowie ein in den Speichermitteln abgelegtes Datenverarbeitungsprogramm auf, die den Betrieb der Kamera 1 und das Zusammenwirken der Komponenten der Kamera 1 steuert. Insbesondere ist über das Datenverarbeitungsprogramm die Aufnahme von digitalen Bildern über das Objektiv 8, Zwischenspeicherung der digitalen Bilder im Speicher, Anzeige der Bilder auf dem Display 9 und Überarbeitung der Bilder zur Veränderung von Helligkeit, Größe, Farben usw. möglich. Insofern werden durch das Datenverarbeitungsprogramm Überarbeitungsmittel bereitgestellt, wobei die Anweisungen für die Überarbeitung durch die Tastatur 10, das Mikrofon 12 oder den berührungssensitiven Bildschirm 9 erfolgen können. Durch die durch das Datenverarbeitungsprogramm bereit gestellten Überarbeitungsmittel ist ferner eine Sortierung von mehreren Bildern und Einfügen der Bilder in ein vorgespeichertes Seitenlayout möglich.

Ferner werden durch das Datenverarbeitungsprogramm der Kamera 1 die Sende- und Empfangeinheit gesteuert, so dass mittels der Antenne 5, die auch in das Gehäuse der Kamera 1 integriert sein kann, eine Funkfernverbindung 7 mit einer Bildbearbeitungseinheit 2 über deren Antenne 6 hergestellt werden kann.

Über die Funkfernverbindung 7 können sowohl die einzelnen Bilddaten der mit dem Objektiv 8 aufgenommenen Bilder als auch die in der Kamera 1 überarbeiteten Bilddaten gesendet werden. Ferner lassen sich über die Funkfernverbindung 7 Zusatzinformationen übertragen, die beispielsweise durch Bildtexte, Bildbeschreibungen und dergleichen gebildet sind. Die Zusatzinformationen können ebenfalls über die Tastatur 10, das berührungssensitive Display 9 oder das Mikrofon 12 eingegeben werden. Insbesondere ist es hier vorteilhaft, dass die Texte über das Mikrofon 12 diktiert und digital aufgezeichnet werden können.

Die von der Sende- und Empfangseinheit 13/14 über die Antenne 6 empfangenen Daten werden in der Bildbearbeitungseinheit 2 be- und/oder verarbeitet, indem sie einfach über eine Datenleitung 11 an die Druckeinrichtung 3 weitergegeben oder in einer Verarbeitungsroutine weiterverarbeitet werden. Hierzu sind Speichermittel 15 vorgesehen, um eine Zwischenspeicherung der von der Kamera 1 erhaltenen Daten zu ermöglichen.

In der Bildbearbeitungseinheit 2 sind in den Speichermitteln 15 ebenfalls Befehlsfolgen in Form eines Datenverarbeitungsprogramms hinterlegt, mit der eine Be- und Verarbeitung der Bilder, die von der Kamera 1 aufgenommen worden sind, möglich ist. Die Verarbeitung kann hierbei ebenfalls eine Veränderung der einzelnen Bilder hinsichtlich der Helligkeit, des Formats, des Kontrasts, der Farbwiedergabe sowie eine Gruppierung und Sortierung der Bilder und Einpassen der Bilder in entsprechende Seitenlayouts nach entsprechenden Vorlagen, die ebenfalls in den Speichermitteln 15 hinterlegt sein können, umfassen. Darüber hinaus kann die Bildbearbeitungseinheit 2 die Bilder mit Zusatzinformationen, wie Bildbeschreibungen, Bildtexten usw. versehen, die die Bildbearbeitungseinheit 2 über die Funkfernverbindung 7 von der Kamera 1 erhalten hat.

Zur Steuerung der Bildbearbeitungseinheit bzw. der Be- und/oder Verarbeitung der von der Kamera 1 erhaltenen digitalen Bilder kann über die Sende-/Empfangseinheit 13/14 eine vom Datenverarbeitungsprogramm gesteuerte Kommunikation mit der Kamera 1 in der Weise stattfinden, dass die Bildbearbeitungseinheit 2 Kommunikationsdaten über die Funkfernverbindung 7 an die Kamera 1 sendet, wobei der Benutzer zur Eingabe bestimmter Informationen über die unterschiedlichen Eingabemittel 9, 10. 12 der Kamera 1 aufgefordert wird, die dann über die Empfangeinheit 14 der Bildbearbeitungseinheit empfangen werden. Die entsprechend aufbereiteten Daten können dann über die Datenleitung 11 an die Druckeinrichtung 3 übermittelt werden, so dass diese das entsprechende Fotobuch 4 bzw. Bildbände, Alben, Poster, Kalender und dergleichen ausdrucken kann, wobei Zusatzeinrichtungen (separat oder integriert) zum Binden, Zuschneiden und dergleichen vorgesehen sein können. In dem gezeigten Beispiel ist die Bildbearbeitungseinheit 2 als separate Einheit dargestellt. Neben der Integration in die Druckeinrichtung 3 (ganz oder teilweise) kann sie bei einer weiteren bevorzugten Ausführungsform auch großteils als Überarbeitungsmittel in der Kammer 1 integriert sein, wobei dann die Bearbeitungseinheit überwiegend die Steuerung der Druckeinrichtung oder nach geschalteter Prozesse übernimmt. Das fertige Fotobuch 4 bzw. allgemein Bildprodukt kann dann direkt an den Nutzer des Mobiltelefons 1 versandt werden, wobei die Versandadresse und weitere Daten zur Abwicklung des Druckauftrags ebenfalls über die Kamera 1 direkt an die Bildbearbeitungseinheit 2 übermittelt werden. Auf diese Weise ist es möglich, dass der Nutzer einer mobilen Kamera mit entsprechenden Übertragungsmitteln die Bilder unmittelbar nach der Aufnahme über die Bildbearbeitungseinheit 2 oder, falls diese in die Druckeinrichtung 3 integriert ist, direkt an die Druckeinrichtung 3 sendet, so dass beispielsweise das fertige Fotoalbum nach Rückkehr des Nutzers aus dem Urlaub sich bereits in seinem Briefkasten befindet.

## Patentansprüche

1. System zur Herstellung von Bildprodukten, wie Fotobüchern, Bildbänden, Alben oder dergleichen, mit
einer mobilen Kamera (1) zur Aufnahme und Speicherung von digitalen Bildern, in welcher Übertragungsmittel (5) zur drahtlosen Funkfernübertragung integriert sind, wobei die Übertragungsmittel neben Sendemitteln auch Empfangsmittel zum Empfang von Kommunikationsdaten der Bildbearbeitungseinheit aufweisen,
einer stationären Bildbearbeitungseinheit (2) zur Be- und/oder Verarbeitung von digitalen Bildern mit einer Empfangseinheit (14) zum Empfang der von der Kamera übermittelten Bilder und Anweisungen und einer Sendeeinheit (13) zur Übertragung von Kommunikationsdaten zur Kamera (1), und
einer Druckeinrichtung (3) zum Ausdruck der in der Bildbearbeitungseinheit bearbeiteten Bilder,
wobei die stationäre Bildbearbeitungseinheit (2) und Kamera (1) derart ausgestattet sind, dass Anweisungen zur Be- und Verarbeitung der Bilder direkt mittels der Übertragungsmittel der Kamera an die Bildbearbeitungseinheit und Kommunikationsdaten zur Kamera gesendet werden, so dass eine gegenseitige Kommunikation aufgebaut wird,
**dadurch gekennzeichnet, dass**
die Kamera (1) Überarbeitungsmittel zur Überarbeitung von aufgenommenen digitalen Bildern umfasst, wobei die Bildbearbeitungseinheit (2) und die Überarbeitungsmittel der Kamera zur Nutzer gesteuerten Bildbe - und verarbeitung derart hergerichtet sind, dass die Bilder in der Bildbearbeitungseinheit (2) und mittels der Überarbeitungsmittel in der Kamera (1) sortiert, gruppiert, formatiert, aufgehellt oder abgedunkelt, im Kontrast oder der Farbwiedergabe verändert, in einem oder mehreren Seitenlayouts eingepasst, mit Beschreibungstexten und/oder Erläuterungen versehen, zu einem Buch mit oder ohne Texten zusammengestellt und/oder zu einem Bildband, einem Poster, Kalender oder dergleichen verarbeitet werden können, wobei die Bildbearbeitung teilweise in der Kamera und teilweise in der Bildbearbeitungseinheit stattfindet.

2. System nach Anspruch 1,
**dadurch gekennzeichnet, dass**
die Bildbearbeitungseinheit (2) eine Sendeeinheit (13) zur Übertragung von Druckdaten zur Druckeinrichtung (3) umfasst.

3. System nach Anspruch 1 oder 2,
**dadurch gekennzeichnet, dass**
die Übertragungsmittel als Mobiltelefon ausgebildet sind.

4. System nach einem der vorhergehenden Ansprüche,
**dadurch gekennzeichnet, dass**
die Übertragungsmittel und die Bildbearbeitungseinheit (2) derart ausgestaltet sind, dass Zusatzinformationen, wie Bildtexte und dergleichen und/oder überarbeitete Bilddaten übertragbar sind.

5. System nach einem der vorhergehenden Ansprüche,
**dadurch gekennzeichnet, dass**
die Kamera (1) bzw. die Übertragungsmittel Eingabemittel (9,10,12) umfassend mindestens eine insbesondere alphanumerische Tastatur (10), ein Eingabedisplay (9) und/oder ein Mikrofon (12) sowie Ausgabemittel umfassend mindestens eine Anzeigeeinheit, insbesondere ein Display (9), und/oder einen Lautsprecher aufweisen.

6. System nach einem der vorhergehenden Ansprüche,
**dadurch gekennzeichnet, dass**
die Bildbearbeitungseinheit (2) in der Druckeinrichtung (3) integriert oder über eine drahtlose oder kabelgebundene Datenleitung (11) mit dieser verbunden ist.

7. System nach einem der vorhergehenden Ansprüche,
**dadurch gekennzeichnet, dass**
die Kamera (1) und/oder die Bildbearbeitungseinheit (2) Speichermittel zur Speicherung der digitalen Bilder, von Vorlagen und/oder Befehlsfolgen zur Be- und/oder Verarbeitung der digitalen Bilder umfasst.

8. Verfahren zur Herstellung von Bildprodukten, wie Fotobüchern, Bildbänden, Alben oder dergleichen, bei dem ein oder mehrere digitale Bilder mittels einer Kamera (1) aufgenommen, über eine Funkfernverbindung an eine stationäre Bildbearbeitungseinheit (2) übermittelt und in einer Druckeinrichtung (3) ausgedruckt werden, wobei in der stationären Bildbearbeitungseinheit eine Be- und/oder Verarbeitung der Bilder erfolgt, und wobei die Anweisungen für die stationäre Bildbearbeitungseinheit (2) zur Be- und Verarbeitung der Bilder direkt mittels in der Kamera (1) integrierter Übertragungsmittel erfolgt, und wobei Kommunikationsdaten von der stationären Bildbearbeitungseinheit zur Kamera gesendet werden, so dass eine gegenseitige Kommunikation zwischen Kamera und stationärer Bildbearbeitungseinheit aufgebaut wird,
**dadurch gekennzeichnet, dass**
eine Nutzer gesteuerte Bildbe- und verarbeitung teilweise in der Kamera durch Überarbeitungsmittel in der Kamera und teilweise in der stationären Bildbearbeitungseinheit erfolgt, wobei die Bilder in der Bildbearbeitungseinheit (2) und mittels Überarbeitungsmittel in der Kamera (1) sortiert, gruppiert, formatiert, aufgehellt oder abgedunkelt, im Kontrast oder der Farbwiedergabe verändert, in einem oder mehreren Seitenlayouts eingepasst, mit Beschreibungstexten und/oder Erläuterungen versehen, zu einem Buch mit oder ohne Texten zusammengestellt und/oder zu einem Bildband, einem Poster, Kalender oder dergleichen verarbeitet werden.

9. Verfahren nach Anspruch 8,
**dadurch gekennzeichnet, dass**
in der Bildbearbeitungseinheit (2) und/oder der Kamera (1) Druckvorlagen gespeichert sind.

10. Verfahren nach einem der Ansprüche 8 oder 9,
**dadurch gekennzeichnet, dass**
die Anweisungen für die Bildbe-, -ver- und/oder -überarbeitung und/oder Zusatzinformationen, wie Bildtexte und dergleichen mittels Tastatur (10), Eingabedisplay (9) und/oder durch Spracheingabe in die Kamera eingegeben und über die Übertragungsmittel an die Bildbearbeitungseinheit übertragen werden.

11. Verfahren nach einem der Ansprüche 8 bis 9,
**dadurch gekennzeichnet, dass**
Kommunikationsdaten der Bildbearbeitungseinheit von der Kamera empfangen und als Text oder Graphik auf einem Display und/oder als akustisches Signal und/oder Sprachausgabe mittels eines Lautsprechers ausgegeben werden.

## Claims

1. System for producing picture products, such as photo books, coffee-table books, albums, and the like, with
a mobile camera (1) for recording and storing digital images, in which transmission means (5) for wireless radio transmission are integrated, wherein the transmission means in addition to sending means also have receiving means for receiving the communications data from the image-processing unit,
a stationary image-processing unit (2) for processing and/or developing digital images comprising a receiver unit (14) for receiving images and instructions transmitted by the camera and a transmitting unit (13) for transmitting communications data to the camera (1), and
a printing device (3) for printing the images processed in the image-processing unit, wherein the stationary image-processing unit (2) and camera (1) are equipped such that instructions for processing and developing the images are sent by the transmission means of the camera direct to the image-processing unit and communications data are sent to the camera, so that mutual communications are established,
**characterised by the fact that**
the camera (1) comprises editing means for editing captured digital images, wherein the image-processing unit (2) and the editing means of the camera for user-controlled image processing are provided such that, in the image-processing unit (2) and by means of the editing means in the camera (1), the images can be sorted, grouped, formatted, brightened or darkened, altered in contrast or colour reproduction, adjusted to one or more page layouts, provided with descriptive text and/or comments, compiled to form a book, with or without text, and/or to a coffee-table book, a poster, calendar and the like, wherein image processing occurs partly in the camera and partly in the image-processing unit.

2. System in accordance with claim,
**characterised by the fact that**
the image-processing unit (2) comprises a transmitting unit (13) for transmitting print data to the printing device (3).

3. System in accordance with claim 1,
**characterised by the fact that**
the transmission means is formed as a mobile phone.

4. System in accordance with any of the previous claims,
**characterised by the fact that**
the transmission means and the image-processing unit (2) are configured such that additional information, such as picture captions and the like, and/or edited image data are transmittable.

5. System in accordance with any of the previous claims,
**characterised by the fact that**
the camera (1) or the transmission means have input means (9,10,12) comprising at least an especially alphanumeric keypad (10), an input display (9) and/or a microphone (12) as well as output means comprising at least one display unit, especially a display (9), and/or a speaker.

6. System in accordance with any of the previous claims,
**characterised by the fact that**
the image-processing unit (2) is integrated in the printing unit (3) or connected to it via a wireless or wired data line (11).

7. System in accordance with any of the previous claims,
**characterised by the fact that**
the camera (1) and/or the image-processing unit (2) comprises memory means for storing the digital images, templates and/or command sequences for processing and/or developing the digital images.

8. Method for producing picture products, such as photo books, picture books, albums, and the like, in which one or more digital images is captured by a camera (1), transmitted via a radio communications connection to a stationary image-processing unit (2) and printed in a printing device (3), wherein processing and/or developing of the images occurs within the stationary image-processing unit, and wherein the instructions for the stationary image-processing unit (2) for processing and developing the images are directly carried out by transmission means integrated in the camera (1) and wherein communications data are sent from the stationary image-processing unit to the camera, such that mutual communications are established between the camera and stationary image-processing unit, **characterised by** the fact that user-controlled image processing takes place partly in the camera by editing means in the camera and partly in the stationary image-processing unit, wherein, in the image-processing unit (2) and by means of editing means in the camera (l), the images are sorted, grouped, formatted, brightened or darkened, altered in contrast or colour reproduction, adjusted to one or more page layouts, provided with descriptive text and/or comments, compiled into a book, with or without text, and/or processed to yield an illustrated book, a poster, calendar and the like.

9. Method in accordance with claim 8,
**characterised by the fact that**
printing templates are stored in the image-processing unit (2) and/or the camera (1).

10. Method in accordance with any of claims 8 or 9,
**characterised by the fact that**
the instructions for image processing, developing and/or editing and/or additional information, such as picture captions and the like, are entered into the camera via a keyboard (10), input display (9) and/or voice input and transmitted by transmission means to the image-processing unit.

11. Method in accordance with any of claims 8 to 9,
**characterised by the fact that**
communications data from the image-processing unit are received by the camera and are output as text or graphics on a display and/or as an audible signal and/or as speech via a loudspeaker.

## Revendications

1. Système de production de produits photographiques, tels que des livres de photographies, des livres illustrés, des albums ou leur équivalent, avec :
un appareil photographique mobile (1) pour prendre et mémoriser des photographies numériques, dans lequel des moyens de transmission (5) sont intégrés pour la transmission radio sans fil, les moyens de transmission comportant, outre des moyens d'émission, des moyens de réception pour recevoir les données de communication provenant de l'unité de traitement d'image ;
une unité de traitement d'image (2) stationnaire pour le traitement et/ou la modification des photographies numériques avec une unité de réception (14) pour recevoir les photographies et les consignes transmises par l'appareil photographique et une unité d'émission (13) pour transmettre les données de communication à l'appareil photographique (1);et
un dispositif d'impression (3) pour imprimer les photographies traitées dans l'unité de traitement d'image ;
l'unité de traitement d'image (2) stationnaire et l'appareil photographique (1) étant configurés de telle sorte que les consignes de traitement et de modification des photographies sont directement envoyées à l'unité de traitement d'image à l'aide des moyens de transmission de l'appareil photographique et que les données de communication sont directement envoyées à l'appareil photographique, de façon à établir une communication bidirectionnelle ;
**caractérisé en ce que :**
l'appareil photographique (1) comprend des moyens de retouche pour retoucher les photographies numériques prises, l'unité de traitement d'image (2) et les moyens de retouche de l'appareil photographique étant réalisés de telle sorte pour le traitement et la modification pilotés par l'utilisateur que c'est dans l'unité de traitement d'image (2) et au moyen des moyens de retouche prévus dans l'appareil photographique (1) que les photographies sont triées, groupées, formatées, éclaircies ou foncées, que leur contraste ou leurs tonalités sont modifiés, qu'elles sont adaptées dans leur mise en page au niveau d'un ou de plusieurs côtés, qu'elles sont dotées d'un texte descriptif et/ou de commentaires, rassemblées en un livre avec ou sans textes et/ou en un album photographique, un poster, un calendrier ou leur équivalent, la modification d'image se déroulant en partie dans l'appareil photographique et en partie dans l'unité de traitement d'image.

2. Système selon la revendication 1, **caractérisé en ce que** l'unité de traitement d'image (2) comprend une unité d'émission (13) pour transmettre des données d'impression au dispositif d'impression (3).

3. Système selon la revendication 1 ou 2, **caractérisé en ce que** les moyens de transmission prennent la forme d'un téléphone mobile.

4. Système selon l'une quelconque des revendications précédentes, **caractérisé en ce que** les moyens de transmission et l'unité de traitement d'image (2) sont réalisés de telle sorte que des informations complémentaires, telles que des textes attenants aux images ou leur équivalent et/ou les données d'image retouchée, sont transmissibles.

5. Système selon l'une quelconque des revendications précédentes, **caractérisé en ce que** l'appareil photographique (1) et/ou les moyens de transmission comportent des moyens de saisie (9, 10, 12) comprenant au moins un clavier (10), notamment alphanumérique, un écran de saisie (9) et/ou un microphone (12) ainsi que des moyens de sortie comprenant au moins une unité d'affichage, notamment un écran (9), et/ou un haut-parleur.

6. Système selon l'une quelconque des revendications précédentes, **caractérisé en ce que** l'unité de traitement d'image (2) est intégrée dans le dispositif d'impression (3) ou reliée à celle-ci via un câble de données (11) avec ou sans fil.

7. Système selon l'une quelconque des revendications précédentes, **caractérisé en ce que** l'appareil photographique (1) et/ou l'unité de traitement d'image (2) comprennent des moyens de mémorisation pour mémoriser des photographies numériques, des modèles et/ou des séquences d'instructions pour le traitement ou la modification des photographies numériques.

8. Procédé de production de produits photographiques, tels que des livres de photographies, des livres illustrés, des albums ou leur équivalent, dans lequel une ou plusieurs photographies numériques sont prises à l'aide d'un appareil photographique (1), transmises à une unité de traitement d'image (2) stationnaire via une liaison radio et imprimées dans un dispositif d'impression (3), un traitement et/ou une modification des images ayant lieu dans l'unité de traitement d'image stationnaire ; et
les instructions transmises à l'unité de traitement d'image (2) stationnaire pour traiter et modifier les images se produisant directement à l'aide des moyens de transmission intégrés dans l'appareil photographique (1) et les données de communication étant envoyées à l'appareil photographique par l'unité de traitement d'image stationnaire, de sorte qu'une communication bidirectionnelle est établie entre l'appareil photographique et l'unité de traitement d'image stationnaire ;
**caractérisé en ce que :**
le traitement et la modification pilotés par l'utilisateur se produisent en partie dans l'appareil photographique à l'aide de moyens de retouche prévus dans l'appareil photographique et en partie dans l'unité de traitement d'image stationnaire, sachant que c'est dans l'unité de traitement d'image (2) et à l'aide des moyens de retouche prévus dans l'appareil photographique (1) que les photographies sont triées, groupées, formatées, éclaircies ou foncées, que leur contraste ou leurs tonalités sont modifiés, qu'elles sont adaptées dans leur mise en page au niveau d'un ou de plusieurs côtés, qu'elles sont dotées d'un texte descriptif et/ou de commentaires, rassemblées en un livre avec ou sans textes et/ou en un album photographique, un poster, un calendrier ou leur équivalent.

9. Procédé selon la revendication 8, **caractérisé en ce que** les modèles d'impression sont mémorisés dans l'unité de traitement d'image (2) et/ou dans l'appareil photographique (1).

10. Procédé selon l'une quelconque des revendications 8 ou 9, **caractérisé en ce que** les consignes de traitement et/ou de modification et/ou les informations complémentaires, telles que les textes attenants aux photographies ou leur équivalent, peuvent être saisies dans l'appareil photographique au moyen d'un clavier (10), d'un écran de saisie (9) et/ou par saisie vocale et transmises à l'unité de traitement d'image via des moyens de transmission.

11. Procédé selon l'une quelconque des revendications 8 à 9, **caractérisé en ce que** les données de communication de l'unité de traitement d'image sont reçues par l'appareil photographique et retransmises sous la forme de texte ou d'un graphique sur un écran et/ou sous la forme d'un signal sonore et/ou d'un message vocal à l'aide d'un haut-parleur.
